# EUROPÄISCHE PATENTSCHRIFT

(11) **EP 3 155 942 B1**
(45) Veröffentlichungstag und Bekanntmachung des Hinweises auf die Patenterteilung: **25.09.2019**
(21) Anmeldenummer: 15189772.5
(22) Anmeldetag: 14.10.2015
(51) Int. Cl.: A47K 3/02, B29C 44/00

(54) **SANITÄRWANNE UND VERFAHREN ZUR HERSTELLUNG EINER SOLCHEN SANITÄRWANNE**
SANITARY TUB AND METHOD FOR PRODUCING SUCH A SANITARY TUB
BAIGNOIRE ET PROCEDE DE FABRICATION D'UNE TELLE BAIGNOIRE

(43) Veröffentlichungstag der Anmeldung: 19.04.2017
(73) Patentinhaber: Mechtold, Peter, 96472 Rödental (DE)
(72) Erfinder: Mechtold, Peter, 96472 Rödental (DE); Schäff, Fred, 96279 Weidhausen (DE)
(74) Vertreter: Isarpatent

(56) Entgegenhaltungen:
- EP-A1- 1 527 725
- DE-B3-102004 040 913
- DE-U1-202011 050 991
- GB-A- 1 381 723
- KR-B1- 100 832 051

## Beschreibung

### GEBIET DER ERFINDUNG

Die vorliegende Erfindung betrifft ein Verfahren zur Herstellung einer Sanitärwanne, insbesondere einer Badewanne, einer Duschwanne oder eines Waschbeckens.

### TECHNISCHER HINTERGRUND

Badewannen und/oder Duschwannen bilden einen wesentlichen Bestandteil praktisch jedes modernen Badezimmers. Speziell in Anbetracht dessen, dass sich viele Menschen in der heutigen Arbeitswelt stetig wachsenden körperlichen und geistigen Belastungen ausgesetzt sehen, bildet die private Badewanne einen Ort der Entspannung und der Erholung. Darüber hinaus sind wannenartige Wasch- und Entspannungsmöglichkeiten ein nicht wegzudenkender Bestandteil von medizinischen Versorgungs- und Rehabilitierungseinrichtungen, Heil-, Thermal- und Kurbädern sowie dem Wellness- und Hotelgewerbe.

Obwohl Badewannen oder ähnliche wannenartige Gefäße grundsätzlich aus den verschiedensten Materialien herstellbar sind, sind Badewannen aus Keramik und Metall, d.h. insbesondere solche aus Stahlblech, nach wie vor weit verbreitet. Jedoch sind solche Wannen aus Metall schwer und werden zudem typischerweise als unangenehm kalt empfunden. Daneben werden Badewannen aus (Sanitär-)Acryl oder aus damit verwandten thermoplastischen Kunststoffen, mitunter aus Holz oder neuerdings auch aus Fiberglass, d.h. glasfaserverstärktem Kunststoff (GFK), angeboten. Acryl stellt hierbei einen sehr vielseitigen Werkstoff dar, der warm und leicht ist und der eine hohe Rutschfestigkeit sowie eine geringe Leitfähigkeit aufweist und vielfältige Möglichkeiten der Farb- bzw. Formgestaltung bietet.

Diesen Typen von Badewannen ist jedoch gemeinsam, dass sie häufig hart und unbequem gestaltet sind. Dies liegt vielfach in den statischen Anforderungen begründet, wonach der Wannenkörper dem Wasserdruck und dem Körpergewicht standhalten muss. Um diesen Nachteilen zumindest teilweise entgegenzuwirken, werden mitunter lose Einlagematten oder Sitze bzw. Liegen zum Einsatz in die Badewanne angeboten, welche aus elastischen und/oder schaumstoffartigen Materialien aufgebaut sind. Häufig wird die Handhabung solcher Einsätze jedoch als lästig und aufwendig empfunden. Darüber hinaus werden Badewannen zudem in (teil-)anatomischer Form ausgebildet, wie es beispielsweise in der Druckschrift DE 102013014058 A1 beschrieben ist. Solche Lösungen sind häufig sehr aufwendig in der Herstellung und somit kostenintensiv. Ferner entstehen bei der Benutzung einer Badewanne häufig Feuchtigkeit und Nässe auch außerhalb der Badewanne, so dass beispielsweise ein angrenzender Boden mitunter rutschig werden kann, was eine harte Badewannenausführung besonders nachteilig macht.

Badewannen, insbesondere solche aus Metall, werden mitunter über einen so genannten Badewannenträger verrückungssicher auf einem Fußboden verankert. Zu diesem Zweck sind solche Badewannenträger mit einer wannenförmigen Aufnahme ausgebildet, welche derartig dimensioniert wird, dass eine in den Badewannenträger eingesetzte Badewanne von diesem vollständig oder zumindest zum überwiegenden Teil aufgenommen wird. Ein solcher Badewannenträger kann insbesondere aus einem Schaumstoff gefertigt sein, beispielsweise Polystyrol, welcher die Badewanne sowohl mit statischen als auch schallabsorbierenden oder wärmedämmenden Eigenschaften versehen kann. Beispielsweise kann hiermit Wärmeabstrahlung an einer Wannenunterseite bzw. an Seitenwänden der Badewanne minimiert werden. So beschreibt beispielsweise die Druckschrift EP 1 036 533 A2 einen ein- oder mehrstückigen Wannenträger aus Schaumstoffmaterial.

Die Druckschrift DE 10 2004 040 913 B3 beschreibt eine Bade- oder Duschwanne umfassend einen Wannenkörper, der einen hartelastischen Grundkörper, insbesondere aus Polystyrol, und mindestens einen weichelastischen Aufliegekörper aus Weichschaum sowie eine wasserundurchlässige Beschichtung aufweist.

Die Druckschrift DE 20 2011 050991 U1 beschreibt ein Verfahren zur Herstellung einer Sanitärwanne mit den Schritten:
Herstellen von Wannenbauteilen aus einem Schaumstoff und Zusammenfügen der Wannenbauteile zu einem Wannenkörper, und Beschichten des Wannenkörpers mit einer flexiblen Wannenkörperumhüllung.

### ZUSAMMENFASSUNG DER ERFINDUNG

Vor diesem Hintergrund liegt der vorliegenden Erfindung die Aufgabe zugrunde, eine komfortablere Wanne für einen Sanitärbereich zu schaffen.

Erfindungsgemäß wird diese Aufgabe gelöst durch ein Verfahren mit den Merkmalen des Patentanspruchs 1.

Die erfindungsgemäße Lösung sieht ein Verfahren zur Herstellung einer Sanitärwanne vor. Das Verfahren umfasst Schneiden und/oder Fräsen von Wannenbauteilen aus einem Schaumstoff und Zusammenfügen der Wannenbauteile zu einem Wannenkörper. Alternativ umfasst das Verfahren Schneiden und/oder Fräsen eines Wannenkörpers in einem Stück aus einem Schaumstoff. Ferner umfasst das Verfahren Beschichten des Wannenkörpers mit einer flexiblen Wannenkörperumhüllung. Das Verfahren umfasst weiterhin dreidimensionales Erfassen der äußeren Gestalt einer Person, Erstellen eines computerlesbaren Datensatzes, welcher die erfasste äußere Gestalt der Person repräsentiert, und computergestütztes Steuern des Schneidens und/oder Fräsens der Wannenbauteile oder des Wannenkörpers basierend auf dem erstellten Datensatz zur Herstellung eines Liegebereichs in dem Wannenkörper im Bereich des Wanneninnenraums, der teilweise oder vollständig anatomisch geformt ist

Eine der vorliegenden Erfindung zugrunde liegende Idee besteht darin, eine Sanitärwanne zum überwiegenden Teil aus einem Schaumstoff, vorzugsweise einem flexiblen Schaumstoff, zu fertigen und den Schaumstoff anschließend mit einer dünnen, wasserdichten Beschichtung zu versehen. Der Wannenkörper der Sanitärwanne, worunter hier der tragende Grundkörper der Sanitärwanne zu verstehen ist, kann vollständig oder zumindest überwiegend aus Schaumstoff gefertigt werden. Die Verwendung von Schaumstoff bietet mehrere, ganz erhebliche Vorteile gegenüber üblicherweise verwendeten Materialien, insbesondere gegenüber Metall oder hartem Kunststoff. Schaumstoff ist grundsätzlich relativ leicht und kann darüber hinaus mehr oder weniger weich ausgeführt werden. Eine Wanne aus Schaumstoff ist nicht hart und kalt wie eine Wanne aus Stahlblech oder Stahlguss, sondern weich und warm. Der Komfortgrad der Sanitärwanne ist vielmehr mit dem von bequemen Sitzmöbeln vergleichbar. Durch geeignete Wahl bzw. Ausgestaltung des Schaumstoffkörpers der Sanitärwanne kann die Sanitärwanne komfortabel und bequem gestaltet werden. Eine Sanitärwanne aus Schaumstoff weist ein sehr viel geringeres Gewicht als bekannte Ausgestaltungen aus Metall, Holz, etc. auf. Die vorliegende Sanitärwanne kombiniert gewissermaßen die positiven Eigenschaften von bekannten Badewannen mit denen eines Sofas, eines Sessels, einer gepolsterten Liege oder dergleichen. Gleichzeitig kann der Schaumstoff ausreichend fest und stabil geformt werden, so dass auch die statischen Anforderungen an eine Badewanne erfüllbar sind. Darüber hinaus dient der Schaumstoff automatisch als Schall- und Wärmedämmung der Sanitärwanne.

Der Schaumstoffkörper der Sanitärwanne wird hierbei durch die Wannenkörperumhüllung wasserdicht abgeschlossen. Eine Wannenkörperumhüllung bezeichnet hierbei eine dünne Beschichtung des Wannenkörpers, welche insbesondere zumindest im Bereich des Wanneninnenraums gegen Flüssigkeiten abdichtet. Die Wannenkörperumhüllung ist flexibel gestaltet, so dass die Eigenschaften des Schaumstoffkörpers der Sanitärwanne, d.h. beispielsweise die Weichheit, auch nach außen hin erhalten bleiben können. Die Zusammensetzung bzw. Konfiguration der Wannenkörperumhüllung kann entsprechend je nach Anwendung und Vorlieben variabel und flexibel gestaltet werden, beispielsweise hinsichtlich Farbgebung, Oberflächenbeschaffenheit oder Funktionalität.

Eine Sanitärwanne im Sinne der Erfindung bezeichnet grundlegend Wannen, wannenförmige oder wannenähnliche Gefäße, Becken oder dergleichen zur Verwendung in einem Sanitärbereich, die unter anderem ein offenes, größeres, tieferes und eventuell längliches Gefäß, insbesondere zum Baden, Duschen oder Waschen aufweisen. Eine Sanitärwanne im Sinne der Erfindung umfasst demnach insbesondere Badewannen, Duschwannen, Whirlpools, Fußbadewannen, Armbadewannen, Sitzbadewannen, medizinische und geriatrische Badewannen, Geburtshilfebadewannen etc.

Der Wannenkörper kann einstückig aus dem Schaumstoff gefertigt sein. In diesem Fall kann der Wannenkörper aus "dem Vollen", d.h. einem einzelnen Schaumstoffblock, geschnitten oder gefräst sein. Die Fertigung eines solchen Wannenkörpers ist folglich besonders einfach und effizient in einem einzelnen Schritt möglich.

Alternativ kann der Wannenkörper aus mehreren Wannenbauteilen aus dem Schaumstoff zusammengesetzt sein. In diesem Fall wird anders als in dem obigen Fall ein additiver Aufbau verfolgt, bei welchem mehrere, d.h. prinzipiell eine Vielzahl, von Einzelteilen zu einem Wannenkörper zusammengesetzt werden. Gegenüber dem obigen Fall schafft dies den Vorteil, dass keine großen und eventuell unhandlichen Bauteile bearbeitet werden müssen. Darüber hinaus eröffnet dies die Möglichkeit, dass Wannenbauteile einzeln oder in Form von "Bausätzen" verfügbar gemacht werden können. Beispielsweise lassen sich hiermit Wannenkörper aus fest vorgegebenen, eventuell standardisierten, Wannenbauteilen individuell konfigurieren. Alternativ oder zusätzlich ist es jedoch auch vorgesehen, dass die einzelnen Wannenbauteile individuell geformt, angefertigt und zusammengefügt werden.

Die Wannenbauteile können mit einem Klebstoff miteinander verklebt sein. Kleben ist ein besonders unkompliziertes und dennoch effektives Fügeverfahren, welches besonders für die Verbindung von Schaumstoffbauteilen Vorteile bietet. Zur Verbindung zweier Wannenbauteile, beispielsweise aus Weichschaumstoff, kann beispielsweise ein Kontaktkleber verwendet werden. Auf diese Weise können eine Vielzahl von Wannenbauteilen schnell und effizient zu einem Wannenkörper zusammengefügt werden.

Ein Liegebereich ist in dem Wannenkörper im Bereich des Wanneninnenraums ausgebildet. In dem Liegebereich kann der Schaumstoff des Wannenkörpers im Wesentlichen Weichschaumstoff enthalten. Hierzu kann der Wannenkörper zumindest in dem Liegebereich vollständig mit Weichschaum ausgebildet sein. Prinzipiell kann es zudem vorgesehen sein, den gesamten Wannenkörper aus einem solchen Weichschaumstoff aufzubauen. In jedem Fall kann jedoch zumindest der Liegebereich besonders komfortabel, weich und bequem ausgebildet werden. Ein solcher Liegebereich kann ein Abschnitt des Wannenkörpers sein, der an einen Abschnitt des Wanneninnenraums angrenzt, welcher zum Liegen oder Sitzen einer Person vorgesehen ist. Dies kann sowohl eine oder mehrere horizontale oder geneigte Liegeflächen in dem Wanneninnenraum, als auch seitliche, vertikale oder abgeschrägte Seitenwände des Wannenkörpers zu dem Wanneninnenraum hin umfassen.

Der Weichschaumstoff kann aus Polyurethan-Schaumstoff, Kaltschaum, viskoelastischem Schaumstoff, Latex-Schaum und/oder Verbund-Schaumstoff oder dergleichen gefertigt sein. Bei der Herstellung von Polyurethan(PUR)-Schaumstoffen werden Polyalkohole und Polyisocyanate in einem chemischen Reaktionsprozess zu langkettigen Makromolekülen verbunden. Das Herstellungsverfahren von solchen Schaumstoffen ist besonders einfach und kostengünstig möglich, so dass PUR-Schaumstoffe vielfältige und breite Anwendung unter anderem auch als Polstermaterial finden. Kaltschaum, auch HR-Schaumstoff (High-Resilient-Schaumstoff), ist ein Polyether-Schaumstoff, der aufgrund seiner offenzelligen, elastischen Strukturierung ein besonders hochwertiges Komfortgefühl erreicht. Thermoelastischer Visko-Schaumstoff bietet auch unter starker Gewichtsbelastung eine besonders vorteilhafte Druckentlastung. Auch dieser Schaumstoff basiert auf Polyurethanen, wobei in diesem Fall deren Viskosität und Dichte mittels zusätzlicher Beimischungen aus verschiedenen Materialien erhöht wird. Ein solcher viskoelastischer Schaumstoff passt sich den individuellen Einwirkungen des Körpergewichts und/oder der Körperwärme optimal an (so genannter Formgedächtniseffekt), so dass ein beaufschlagter Druck verteilt wird und Druckpunkte vermieden werden. Latexschaum kann sowohl aus natürlichen, d.h. Kautschuk, als auch aus synthetischen Rohstoffen mittels Vulkanisation hergestellt werden. Auch Latexschaum passt sich dem Körper vorteilhaft an und bietet eine sehr gute Stützfunktion bei gleichzeitig hervorragender Punktelastizität. Verbundschaumstoffe werden üblicherweise aus geflockten PUR-Schaumstoffresten gefertigt, die miteinander verpresst werden, wobei ein besonders belastbarer Schaumstoff mit langer Lebensdauer entsteht. Prinzipiell sind auch Kombinationen dieser Materialien und/oder ein Schichtaufbau (Sandwich-Bauweise) aus diesen Materialien vorgesehen.

Ferner kann der Weichschaumstoff ein Raumgewicht im Bereich zwischen 20 Kg/m³ und 100 Kg/m³ und/oder eine Stauchhärte im Bereich zwischen 1,5 kPa und 4 kPa bei 40% Zusammendrücken aufweisen. Beispielsweise kann der Weichschaumstoff ein Raumgewicht von 30 Kg/m³, 40 Kg/m³, 50 Kg/m³ oder 60 Kg/m³ aufweisen. Beispielsweise kann der Weichschaumstoff zusätzlich oder alternativ eine Stauchhärte von 2 kPa, 2,5 kPa oder 3 kPa bei 40% Zusammendrücken aufweisen. Das Raumgewicht (auch als Rohdichte bezeichnet) beziffert die Dichte eines porösen Festkörpers basierend auf dem Volumen einschließlich der Porenräume und gibt somit an, welche Masse von Rohmaterial zur Bildung eines bestimmten Volumens aus Schaumstoff notwendig ist. Das Raumgewicht wird häufig als ein zentrales Qualitätsmerkmal für Polsterungen verwendet, das es bei vorgegebenen Abmessungen des Gegenstands die Porosität bzw. das Porenvolumen quantifiziert. Eine Polsterung mit einem hohen Raumgewicht ist typischerweise besonders langlebig. Die Stauchhärte ist ein weiteres wichtiges Beurteilungsmerkmal für Schaumstoffe und quantifiziert die "Härte" einer Polsterung. Zur Ermittlung der Stauchhärte wird ein Prüfkörper zusammengedrückt und der Druck (bzw. die Kraft) gemessen, welcher notwendig ist, den Prüfkörper auf einen bestimmten Betrag seiner ursprünglichen Höhe (häufig 40 %) zusammenzudrücken. So kann ein Bauteil aus Weichschaumstoff mit beispielweise einem Raumgewicht von 30 Kg/m³ und einer Stauchhärte von 2 kPa ein besonders softes bzw. weiches Komfortgefühl aufweisen. Je nach Empfinden und Vorlieben kann jedoch auch eine höhere Stauchhärte wünschenswert sein, um einen individuell optimalen Kompromiss zwischen Komfort und Halt zu erreichen.

Gemäß der Erfindung wird der Liegebereich teilweise oder vollständig anatomisch geformt. Neben der Wahl und Konfiguration des Schaumstoffmaterials kann auch über die Formgebung des Liegebereichs das Komfortgefühl verbessert werden. So kann der Liegebereich in dieser Weiterbildung individuell angepasst und geformt werden.

Entsprechend umfasst das Verfahren gemäß der Erfindung dreidimensionales Erfassen der äußeren Gestalt einer Person. Ferner umfasst das Verfahren Erstellen eines computerlesbaren Datensatzes, welcher die erfasste äußere Gestalt der Person repräsentiert. Ferner umfasst das Verfahren computergestütztes Steuern des Schneidens und/oder Fräsens der Wannenbauteile oder des Wannenkörpers basierend auf dem erstellten Datensatz zur Herstellung einer teilweise oder vollständig anatomisch geformten Sanitärwanne. Beispielsweise kann die Gestalt einer Person mittels einer 3D-Abtastung mit einem 3D-Scanner erfasst werden. Der hieraus entstehende Datensatz kann wiederum als Vorgabe für eine computergesteuerte Schneid- oder Fräsmaschine verwendet werden, um beispielsweise anatomisch geformte Wannenbauteile halb- oder vollautomatisch aus einem Schaumstoff zu fertigen. Entsprechend kann alternativ auch direkt der gesamte Wannenkörper mit anatomischer Formgebung integral, d.h. einstückig, aus einem Schaumstoffblock geschnitten oder gefräst werden.

Es kann ein Trägerbereich in dem Wannenkörper außerhalb des Liegebereichs ausgebildet sein. In dem Trägerbereich kann der Schaumstoff des Wannenkörpers im Wesentlichen Hartschaumstoff enthalten. Insgesamt betrachtet kann der Wannenkörper folglich aus einem oder mehreren Schaumstoffen mit verschiedenen Härten gebildet sein. So kann der Liegebereich hinsichtlich des Liegekomforts optimiert sein und mit einem besonders weichen Schaumstoff ausgebildet sein. Der Trägerbereich, beispielsweise ein Seitenwandbereich und/oder ein Bodenbereich der Sanitärwanne, kann mit einem deutlich härteren und stabileren Hartschaum ausgebildet sein, welcher vorwiegend die statische Stabilität der Sanitärwanne sichert.

Der Hartschaumstoff kann aus expandiertem Polystyrol (EPS) und/oder extrudiertem Polystyrol (XPS) oder dergleichen gefertigt sein. In einem Beispiel kann der Hartschaumstoff aus dem EPS Styropor gefertigt sein. In einem anderen Beispiel kann der Hartschaumstoff aus dem XPS Styrodur gefertigt sein. Darüber hinaus sind auch Kombinationen dieser oder ähnlicher Materialien vorgesehen, wobei insbesondere auch Sandwich-Bauweisen zum Einsatz kommen können.

Die flexible Wannenkörperumhüllung kann mehrschichtig ausgebildet sein. Insbesondere kann die flexible Wannenkörperumhüllung zumindest eine verbindende Grundierungsschicht und eine darüber befindliche wasserabdichtende Trägerschicht aufweisen. Die Grundierungsschicht kann beispielsweise zur Definition einer Oberfläche für die Trägerschicht dienen, da die Oberfläche des Schaumstoffs des Wannenkörpers typischerweise nicht notwendigerweise eben bzw. glatt ausgebildet sein muss. Die Grundierungsschicht dient gewissermaßen als Verbindung zwischen dem Schaumstoff des Wannenkörpers und der eigentlichen wasserabdichtenden Trägerschicht.

Ferner kann die flexible Wannenkörperumhüllung über der wasserdichten Trägerschicht weiterhin eine Schutzschicht aufweisen. Die Schutzschicht kann insbesondere transparent ausgebildet sein. Beispielsweise kann zwischen einer wasserabdichtenden Trägerschicht und einer transparenten Schutzschicht weiterhin eine Farbschicht vorgesehen sein. Alternativ kann auch die Schutzschicht farblich gestaltet sein. Die Schutzschicht kann in diesem Fall insbesondere resistent gegen Schmutz, Kratzer, Abrieb und/oder Schläge ausgebildet sein. Auch kann eine spezielle Gewebeschicht als zusätzliche Schicht in die flexible Wannenkörperumhüllung eingebracht werden. Diese Gewebeschicht kann eine Beschädigung der wasserdichten Trägerschicht bzw. der flexiblen Wannenkörperumhüllung durch scharfe Gegenstände minimieren oder vollständig verhindern. Weiterhin kann die Schutzschicht besonders pflegeleicht ausgebildet sein, wobei sie insbesondere mit haushaltsüblichen Reinigungsmitteln gereinigt werden kann. Prinzipiell kommen hierbei insbesondere auch nanostrukturierte Beschichtungen in Frage, welche unterschiedliche Eigenschaften haben können. Die Schutzschicht kann beispielsweise insbesondere antibakteriell, selbstreinigend und/oder rutschsicher ausgebildet sein.

Die flexible Wannenkörperumhüllung kann eine Bruchdehnung von größer als 300 % aufweisen. Beispielsweise kann die flexible Wannenkörperumhüllung eine Bruchdehnung von 700 % aufweisen. Die Bruchdehnung quantifiziert die Verformungsfähigkeit eines Werkstoffes und bildet eine wichtige Kenngröße zur Erfassung der maximalen plastischen Verformbarkeit eines Bauteils bis zum Bruch bzw. bis zum Reißen. Die Bruchdehnung wird als prozentualer Wert der relativen Längenänderung des Bauteils bei einem Zugversuch angegeben.

Es kann zumindest ein Abfluss in der Sanitärwanne ausgebildet sein. Der Abfluss kann von dem Wanneninnenraum aus durch die flexible Wannenkörperumhüllung und den Wannenkörper hindurchführen. Der Abfluss kann beispielsweise aus einem flexiblen oder rigiden Kunststoff oder aus Metall gefertigt sein und in eine hierfür vorgesehene Aussparung oder Durchgangsbohrung in den Wannenkörper eingefügt sein. Beispielsweise kann hierzu nachträglich eine Durchgangsbohrung durch den fertig herstellten Wannenkörper ausgebildet werden. Alternativ kann eine Aussparung bereits während der Herstellung des Wannenkörpers vorgesehen werden. Die flexible Wannenkörperumhüllung kann hierbei wasserdicht mit dem Abfluss abschließen. In entsprechender Weise können auch mehrere Abflüsse vorgesehen sein, z.B. ein Überlauf. Zusätzlich können darüber hinaus auch ein oder mehrere Zuflüsse direkt in die Sanitärwanne eingearbeitet sein, z.B. als kombinierter Einlauf/Überlauf. Prinzipiell können letztere jedoch auch extern an der Sanitärwanne angebracht werden bzw. im Bereich der Sanitärwanne vorgesehen sein, z.B. in einer Badezimmerwand über bzw. neben der Sanitärwanne.

Der zumindest eine Abfluss kann elastisch in den Wannenkörper und die Wannenkörperumhüllung eingearbeitet sein. Hiermit wird verhindert, dass eventuell auftretende gegenläufige Zugkräfte, welche auf den Abfluss wirken können, z.B. beim Transport der Sanitärwanne, beim Verschieben oder Verrücken der Sanitärwanne, oder bei einem Stoß oder dergleichen, nicht zu einem Ab- oder Einreißen der Dichtung an dem Abfluss führen.

Der zumindest eine Abfluss kann ein mittleres Elastizitätsmodul E_{A}, die flexible Wannenkörperumhüllung ein mittleres Elastizitätsmodul E_{U} und der Wannenkörper ein mittleres Elastizitätsmodul E_{K} aufweisen. Hierbei kann die Relation E_{K} ≤ E_{U} ≤ E_{A} erfüllt sein, insbesondere kann E_{K} < E_{U} < E_{A} gelten. Diese Wahl der mittleren Elastizitätsmodule der einzelnen Komponenten der Sanitärwanne ist eine mögliche vorteilhafte Ausbildung, bei welcher ein mehr oder weniger flexibler Abfluss flexibel mit der Wannenkörperumhüllung und dem Wannenkörper verbunden ist. Der Schaumstoff des Wannenkörpers kann aus mehreren weichen und harten Schaumstoffkomponenten bestehen, welche im Mittel elastischer sein können als die Wannenkörperumhüllung bzw. der Abfluss. Der Abfluss kann beispielsweise aus einem rigiden Kunststoff geformt sein und flexibel mit der Wannenkörperumhüllung verbunden sein. Sofern Zugkräfte auf die Sanitärwanne beispielsweise im Bereich des Abflusses einwirken, so werden diese durch die relative große Elastizität des Schaumstoffs des Wannenkörpers bzw. der flexiblen Wannenkörperumhüllung abgefedert.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER FIGUREN

Die vorliegende Erfindung wird nachfolgend anhand der in den schematischen Figuren angegebenen Ausführungsbeispiele näher erläutert. Es zeigen dabei:
- Fig. 1: eine perspektivische, transparente Ansicht einer Sanitärwanne von schräg oben gemäß einem Beispiel,
- Fig. 2: eine perspektivische Ansicht der Sanitärwanne aus Fig. 1 mit einer darin befindlichen Person,
- Fig. 3: eine Draufsicht auf die Sanitärwanne aus Fig. 1,
- Fig. 4: eine perspektivische Ansicht der Sanitärwanne aus Fig. 1 von schräg oben,
- Fig. 5: eine Explosionsansicht der Sanitärwanne aus Fig. 1,
- Fig. 6: eine schematische Querschnittsansicht einer Wannenkörperumhüllung der Sanitärwanne aus Fig. 1, und
- Fig. 7: ein schematisches Ablaufdiagramm eines erfindungsgemäßen Verfahrens zur Herstellung der Sanitärwanne aus Fig. 1 gemäß einer Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

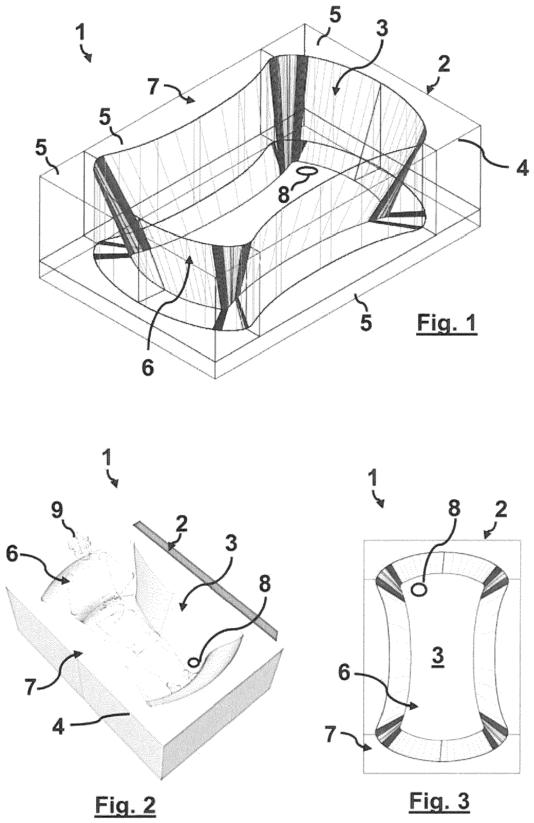

Fig. 1 zeigt eine perspektivische, transparente Ansicht einer Sanitärwanne von schräg oben gemäß einem Beispiel.

In Fig. 1 bezeichnet das Bezugszeichen 1 eine Sanitärwanne. Diese Sanitärwanne 1 ist als Badewanne für eine Person 9 ausgebildet. Die Sanitärwanne 1 kann als Einbauwanne, freistehende Badewanne, als Sitzwanne oder Badewanne sonstiger Bauart (z.B. Whirlpool) Verwendung finden. Die Sanitärwanne 1 umfasst grundlegend einen Wannenkörper 2, welcher einen Wanneninnenraum 3 umschließt, und eine flexible Wannenkörperumhüllung 4, welche fest mit dem Wannenkörper 2 verbunden ist und den Wannenkörper 2 zumindest im Bereich des Wanneninnenraums 3 wasserundurchlässig abdeckt. Der Wanneninnenraum 3 ist zur Aufnahme einer Flüssigkeit, insbesondere von Wasser, vorgesehen.

Die Sanitärwanne 1 kann überdies wie übliche Badewannen einen Abfluss 8, einen Überlauf, eine Zufluss etc. sowie die entsprechenden Armaturen aufweisen. Beispielhaft ist in Fig. 1 lediglich ein Abfluss 8 dargestellt. Dem Fachmann wird unabhängig davon jedoch klar sein, dass die Sanitärwanne 1 mit den üblichen Ab- und Zuflüssen sowie Bedienelementen ausgestattet werden kann.

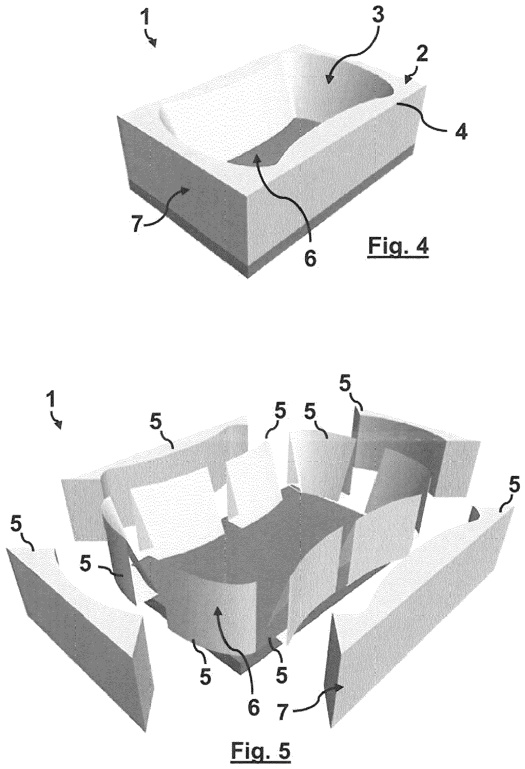

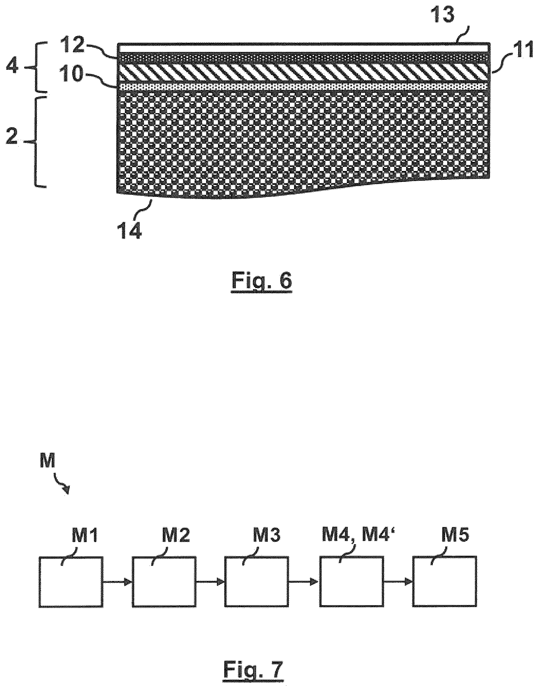

Der genaue Aufbau und die Herstellung dieser Sanitärwanne 1 wird nachfolgend mit Bezug auf Fig. 1 bis Fig. 6 näher erläutert. Fig. 2 zeigt hierbei eine perspektivische Ansicht der Sanitärwanne 1 aus Fig. 1 mit einer darin befindlichen Person 9. Fig. 3 zeigt eine Draufsicht auf die Sanitärwanne 1 aus Fig. 1. Fig. 4 zeigt eine perspektivische Ansicht der Sanitärwanne 1 aus Fig. 1 von schräg oben. Fig. 5 zeigt eine Explosionsansicht der Sanitärwanne 1 aus Fig. 1. Fig. 6 schließlich zeigt eine schematische Querschnittsansicht der Wannenkörperumhüllung 4 der Sanitärwanne 1 aus Fig. 1.

Der Wannenkörper 2 der Sanitärwanne ist im Wesentlichen aus einem in Fig. 1 nicht gezeigten Schaumstoff 14 gebildet (vgl. Fig. 6). Hierzu wurde eine Vielzahl von Wannenbauteilen 5 aus diesem Schaumstoff geschnitten bzw. gefräst und zu dem Wannenkörper 2 zusammengefügt bzw. zusammengesetzt. Die genaue Zusammensetzung des Wannenkörpers 2 aus diesen Wannenbauteilen 5 kann in Fig. 5 nachvollzogen werden, auf welcher die einzelnen Wannenbauteile 5 und ihre jeweilige Positionierung innerhalb des Wannenkörpers 2 angedeutet sind. Beim Zusammenfügen wurden die einzelnen Wannenbauteile 5 mittels eines Klebstoffes miteinander verklebt. Abschließend wurde der so gefertigte Wannenkörper 2 mit der flexiblen Wannenkörperumhüllung 4 beschichtet. Der Aufbau der Wannenkörperumhüllung 4 wird untenstehend mit Bezug auf Fig. 6 ausführlich erläutert.

Prinzipiell ist alternativ zu dem beschriebenen Herstellungsverfahren auch vorgesehen, einen Wannenkörper 2 in einem Stück aus einem Block aus Schaumstoff 14 zu schneiden oder zu fräsen. Dies macht die Fertigung des Wannenkörpers 2 besonders einfach und effizient in einem einzelnen Schritt möglich, wohingegen die obige additive Zusammensetzung des Wannenkörpers 2 einem Baukastenprinzip folgt, indem kleinere und handlichere Wannenbauteile 5 zusammengesetzt werden.

Der Wannenkörper 2 ist in einen Liegebereich 6 und einen Trägerbereich 7 unterteilt. Der Liegebereich 6 ist prinzipiell angrenzend zu dem Wanneninnenraum 3 in dem Wannenkörper 2 ausgebildet, wobei der Schaumstoff 14 in diesem Liegebereich 6 im Wesentlichen einen Weichschaumstoff enthält. Der Liegebereich 6 dient in diesem Ausführungsbeispiel gewissermaßen als Komfortbereich. Der Trägerbereich 7 dient hingegen vielmehr als tragende Struktur des Wannenkörpers 2 und enthält aus diesem Grund im Wesentlichen Hartschaumstoff. Der Trägerbereich 7 des Wannenkörpers 2 umfasst in der gezeigten Ausführungsform Außenwände sowie Boden des Wannenkörpers 2. Während der Hartschaumstoff sowohl für die Außenwände als auch den Boden die grundlegende statische Stabilität sichert, kann er insbesondere auch im Bodenbereich der Sanitärwanne 1 zur Verbesserung der Trittfestigkeit dienen.

Der Weichschaumstoff kann Polyurethan-Schaumstoff, Kaltschaum, viskoelastischen Schaumstoff, Latex-Schaum, Verbund-Schaumstoff oder einen ähnlichen geeigneten weichen Schaumstoff enthalten. Der Hartschaumstoff kann hingegen beispielsweise aus expandiertem Polystyrol (EPS), extrudiertem Polystyrol (XPS) oder dergleichen oder einer Kombination von diesen gefertigt sein. Der Schaumstoff 14 kann hierbei zusätzlich Schall und Wärme dämmende Funktionen übernehmen bzw. speziell zu diesem Zweck ausgebildet werden. Beispielsweise kann der Weichschaumstoff ein Kaltschaum sein, welcher ein besonders hochwertiges Komfortgefühl schafft. Der Hartschaumstoff kann beispielsweise ein Styrodur sein. Beide Schaumstoffe sind kostengünstig herstellbar und weisen ein geringes Gewicht auf, so dass die Sanitärwanne gewichts- und kosteneffizient herstellbar ist.

In den Fig. 1 - 5 ist weiterhin schematisch angedeutet, dass der Liegebereich 6 der Sanitärwanne 1 teilweise oder vollständig anatomisch geformt ist. Dies bedeutet, dass der Wannenkörper 2 in dem Liegebereich 6 einen anatomisch an die äußere Gestalt einer Person 9 angepasste Form aufweist. Beispielsweise kann der Liegebereich 6 an den Oberkörper einer Person 9 angepasst sein. Alternativ oder zusätzlich kann der Liegebereich 6 auch an den Rumpfbereich und/oder den Unterkörper einer Person 9 angepasst sein. Durch die anatomische Anpassung des Liegebereichs 6 kann unter anderem auch der Wanneninnenraum 3 der Sanitärwanne 1 gegenüber einer herkömmlichen Badewanne verkleinert werden, wodurch pro Badegang eine signifikante Wassermenge eingespart werden kann.

Der Liegebereich 6 wird individuell für eine bestimmte Person 9 ausgeformt. Beispielsweise kann die äußere Gestalt der Person 9 dreidimensional abgetastet werden, z.B. mit einem 3D-Scanner. Aufbauend auf einem hieraus gewonnen Scan-Datensatz können die einzelnen Wannenbauteile 5 mittels einer Computersteuerung maschinell geschnitten oder gefräst werden.

Fig. 6 zeigt eine schematische Querschnittsansicht der Wannenkörperumhüllung 4 der Sanitärwanne 1 aus Fig. 1, welche den Schaumstoff 14 des Wannenkörpers 2 zumindest im Bereich des Wanneninnenraums 3 wasserundurchlässig abdichtet.

Die flexible Wannenkörperumhüllung 4 ist mehrschichtig ausgebildet. Direkt auf den Schaumstoff 14 ist eine verbindende Grundierungsschicht 10 aufgetragen, welche eine glatte und ebene Oberfläche auf dem Schaumstoff 14 definiert, auf welche weitere Schichten aufgetragen werden können. Über der Grundierungsschicht 10 liegt die eigentliche wasserabdichtende Trägerschicht 11. Über der Trägerschicht 11 folgt eine Farbschicht 12 und abschließend eine transparente Schutzschicht 13. Die Schutzschicht 13 kann insbesondere resistent gegen Schmutz, Kratzer, Abrieb und/oder Schläge ausgebildet sein und darüber hinaus mit einer Nanostruktur versehen sein, welche beispielsweise antibakteriell, selbstreinigend und/oder rutschsicher ausgebildet sein kann. Auch kann eine spezielle Gewebeschicht als zusätzliche Schicht in die flexible Wannenkörperumhüllung 4 eingebracht werden (hier nicht abgebildet). Diese Gewebeschicht kann eine Beschädigung der wasserdichten Trägerschicht 11 bzw. der flexiblen Wannenkörperumhüllung 4 durch scharfe Gegenstände minimieren oder vollständig verhindern.

Fig. 7 zeigt ein schematisches Ablaufdiagramm eines erfindungsgemäßen Verfahrens M zur Herstellung der Sanitärwanne 1 aus Fig. 1 gemäß einer Ausführungsform der Erfindung.

Das Verfahren M umfasst unter M1 den Schritt des dreidimensionalen Erfassens der äußeren Gestalt einer Person 9, beispielsweise der Person 9 aus Fig. 2,

Das Verfahren M umfasst ferner unter M2 den Schritt des Erstellens eines computerlesbaren Datensatzes, welcher die erfasste äußere Gestalt der Person 9 repräsentiert.

Das Verfahren M umfasst ferner unter M3 den Schritt des computergestützten Steuerns eines unter M4 bzw. M4' folgenden Schritt des Schneidens oder Fräsens basierend auf dem erstellten Datensatz zur Herstellung einer teilweise oder vollständig anatomisch geformten Sanitärwanne 1.

Das Verfahren M umfasst im Folgenden entweder unter M4 den Schritt des Schneidens und/oder Fräsens von Wannenbauteilen 5 aus einem Schaumstoff 14 und Zusammenfügen der Wannenbauteile 5 zu einem Wannenkörper 2. Alternativ umfasst das Verfahren M unter M4' den Schritt des Schneidens und/oder Fräsens eines Wannenkörpers 2 in einem Stück aus einem Schaumstoff 14.

Danach umfasst das Verfahren M unter M5 in jedem Fall den Schritt des Beschichtens M5 des Wannenkörpers 2 mit einer flexiblen Wannenkörperumhüllung 4.

Obwohl die vorliegende Erfindung anhand bevorzugter Ausführungsbeispiele vorstehend vollständig beschrieben wurde, ist sie darauf nicht beschränkt, sondern auf vielfältige Art und Weise innerhalb des Schutzumfangs des Anspruchs modifizierbar. In der vorangegangenen detaillierten Beschreibung sind z.B. verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele innerhalb des Schutzumfangs des Anspruchs.

### BEZUGSZEICHENLISTE

- 1: Sanitärwanne
- 2: Wannenkörper
- 3: Wanneninnenraum
- 4: Wannenkörperumhüllung
- 5: Wannenbauteil
- 6: Liegebereich
- 7: Trägerbereich
- 8: Abfluss
- 9: Person
- 10: Grundierungsschicht
- 11: Trägerschicht
- 12: Farbschicht
- 13: Schutzschicht
- 14: Schaumstoff

- M: Verfahren
- M1: Verfahrensschritt
- M2: Verfahrensschritt
- M3: Verfahrensschritt
- M4, M4': Verfahrensschritt
- M5: Verfahrensschritt

## Patentansprüche

1. Verfahren (M) zur Herstellung einer Sanitärwanne (1), mit den Schritten:
Schneiden und/oder Fräsen (M4) von Wannenbauteilen (5) aus einem Schaumstoff (14) und Zusammenfügen der Wannenbauteile (5) zu einem Wannenkörper (2), oder Schneiden und/oder Fräsen (M4') eines Wannenkörpers (2) in einem Stück aus einem Schaumstoff (14); und
Beschichten (M5) des Wannenkörpers (2) mit einer flexiblen Wannenkörperumhüllung (4),
wobei das Verfahren weiterhin umfasst:
dreidimensionales Erfassen (M1) der äußeren Gestalt einer Person (9),
Erstellen (M2) eines computerlesbaren Datensatzes, welcher die erfasste äußere Gestalt der Person (9) repräsentiert, und
computergestütztes Steuern (M3) des Schneidens und/oder Fräsens (M4, M4') der Wannenbauteile (5) oder des Wannenkörpers (2) basierend auf dem erstellten Datensatz zur Herstellung eines Liegebereichs (6) in dem Wannenkörper (2) im Bereich des Wanneninnenraums (3), der teilweise oder vollständig anatomisch geformt ist.

## Claims

1. Method (M) of manufacturing a sanitary tub (1), with the steps:
cutting and/or milling (M4) tub components (5) from a foam (14) and assembling the tub components (5) to form a tub body (2), or cutting and/or milling (M4') a tub body (2) in one piece from a foam (14); and
coating (M5) the tub body (2) with a flexible tub body sheathing (4),
wherein the method also comprises:
three-dimensional detecting (M1) of the external shape of a person (9),
preparing (M2) a computer-readable dataset representing the recorded external shape of the person (9), and
computer-aided controlling (M3) of the cutting and/or milling (M4, M4') of the tub components (5) or the tub body (2) based on the prepared dataset for manufacturing a partially or entirely anatomically shaped resting area (6) in the tub body (2) in the region of the tub interior (3).

## Revendications

1. Procédé (M) de fabrication d'une baignoire (1), comprenant les étapes consistant à :
découper et/ou fraiser (M4) des composants de baignoire (5) à partir d'une mousse (14) et assembler les composants de baignoire (5) en un corps de baignoire (2), ou découper et/ou fraiser (M4') un corps de baignoire (2) dans un morceau en mousse (14) ; et
recouvrir (M5) le corps de baignoire (2) d'un revêtement de corps de baignoire flexible (4),
dans lequel le procédé consiste en outre à :
détecter en trois dimensions (M1) la forme extérieure d'une personne (9),
créer (M2) un ensemble de données lisibles par ordinateur,
qui représente la forme extérieure enregistrée de la personne (9), et
commander de manière assistée par ordinateur (M3) la découpe et/ou le fraisage (M4, M4') des composants de baignoire (5) ou du corps de baignoire (2) en se basant sur l'ensemble de données créé pour fabriquer une zone d'allongement (6) dans le corps de baignoire (2) au niveau de l'espace intérieur de baignoire (3) et qui a une forme partiellement ou totalement anatomique.
